# EUROPÄISCHE PATENTANMELDUNG

(11) **EP 4 194 166 A1**
(43) Veröffentlichungstag der Anmeldung: **14.06.2023**
(21) Anmeldenummer: 22210749.2
(22) Anmeldetag: 01.12.2022
(51) Int. Cl.: B27M 1/08, B27C 5/06, B23Q 7/18

(54) **VERFAHREN ZUR BEARBEITUNG VON FORTLAUFEND BEWEGTEN WERKSTÜCKEN**

(30) Priorität: 02.12.2021 DE 102021131764
(71) Anmelder: HOMAG GmbH, 72296 Schopfloch (DE)
(72) Erfinder: Kaba, Erdal, 72290 Loßburg (DE); Müller, Michael, 72178 Waldachtal (DE); Sieber, Harald, 72160 Horb a. N. (DE)
(74) Vertreter: Hoffmann Eitle

(57) **Zusammenfassung**

Ein Verfahren zur Bearbeitung von fortlaufend bewegten Werkstücken, die bevorzugt zumindest abschnittsweise aus Holz, Holzwerkstoffen, Kunststoff oder dergleichen bestehen, in einer einseitigen Durchlaufbearbeitungsvorrichtung ist vorgesehen. Das Verfahren weißt die folgenden Schritte auf: erstes Ausrichten eines Werkstücks in der Durchlaufbearbeitungsvorrichtung an einer im Wesentlichen quer zur Bewegungsrichtung verlaufenden Referenzseite des Werkstücks, Bearbeiten einer im Wesentlichen parallel zur Bewegungsrichtung verlaufenden ersten Seite des Werkstücks in Abhängigkeit von der Referenzseite, Drehen oder Rotieren des Werkstücks, bevorzugt um 180°, zweites Ausrichten des Werkstücks in der Durchlaufbearbeitungsvorrichtung und Bearbeiten einer im Wesentlichen parallel zur Bewegungsrichtung verlaufenden zweiten Seite des Werkstücks in Abhängigkeit von der Referenzseite. Das zweite Ausrichten des Werkstücks erfolgt an der im Wesentlichen quer zur Bewegungsrichtung verlaufenden Referenzseite des Werkstücks und/oder erfolgt in Abhängigkeit eines erfassten Winkels, der zwischen der quer zur Bewegungsrichtung verlaufenden Referenzseite des Werkstücks und einer der Referenzseite gegenüberliegenden Seite des Werkstücks erfasst wird. Dieses Erfassen des Winkels wird während oder nach dem Bearbeiten der im Wesentlichen parallel zur Bewegungsrichtung verlaufenden ersten Seite durchgeführt.

## Beschreibung

### Hintergrund der Erfindung

### Technisches Gebiet

Die vorliegende Erfindung bezieht sich auf ein Verfahren zur Bearbeitung von fortlaufend bewegten Werkstücken, die bevorzugt zumindest abschnittsweise aus Holz, Holzwerkstoffen, Kunststoff oder dergleichen bestehen, in einer einseitigen Durchlaufbearbeitungsvorrichtung.

### Beschreibung des Standes der Technik

In Durchlaufbearbeitungsvorrichtungen ist es möglich, dass Werkstücke an einer Bearbeitungsstation der Durchlaufbearbeitungsvorrichtung vorbei gefördert werden und dabei bearbeitet werden. Man spricht also von einer durchlaufenden Bearbeitung von Werkstücken. In diesem technischen Gebiet der (Holz-) Bearbeitungsmaschinen sind sowohl einseitige als auch zweiseitige Durchlaufbearbeitungsvorrichtungen bekannt. Während bei einseitigen Durchlaufbearbeitungsvorrichtungen eine Seite eines Werkstücks im Durchlauf bearbeitet werden kann, ermöglichen zweiseitige Durchlaufbearbeitungsvorrichtungen die parallele Bearbeitung von zwei Seiten eines Werkstücks in einem Durchlauf.

Solche einseitigen Durchlaufbearbeitungsvorrichtungen werden auch zur flexiblen Formatbearbeitung von Möbelteilen bzw. Holzplatten mit unterschiedlichen Größen eingesetzt, die jeweils an den Längs- und/oder Querkanten zu bearbeiten sind. Eine derartige Bearbeitung kann beispielsweise eine Längen- und Querbearbeitung durch Fräsen, Auf- bzw. Umleimen von Kanten sowie eine daran anschließende Nachbearbeitung der Kante sein, um fertige Möbelteile, wie beispielsweise ein Front- oder Korpuselement, im Durchlauf herzustellen.

Bei der Herstellung von solchen plattenförmigen Möbelteilen entstehen in der Regel Zwischenprodukte (Rohteile), die durch die Aufteilung großer Platten entstehen oder einzelnen (zum Beispiel aus Rahmen, Füllungen und Decks) hergestellt werden. Solche Rohteile weisen in Bezug auf Geradheit der Kanten, Maßhaltigkeit, Winkel und Parallelität in der Regel größere Toleranzen auf als im Endprodukt zulässig sind. Das heißt, für gewöhnlich weisen die Längs- und Querseiten eines Werkstücks, welches in einer einseitigen Durchlaufbearbeitungsvorrichtung bearbeitet werden soll, leichte Maß- und Winkelfehler auf.

Deshalb ist es oft üblich, dass zeitgleich mit einer Kantenbearbeitung (zum Beispiel eine Beschichtung der Schmalflächen des Werkstücks mit Kantenbändern) eine Formatbearbeitung stattfindet, wobei das Rohteil an den Kanten bzw. Schmalflächen (Stirnseiten) zerspanend bearbeitet wird, um eine ausreichende Maß-, Parallelitäts-, und Winkelgenauigkeit zu erzielen und ein Werkstück mit vier rechtwinkligen Ecken zu erhalten.

Ein Beispiel für eine solche durchlaufende Bearbeitung von Werkstücken in einer einseitigen Durchlaufbearbeitungsvorrichtung ist in der DE 10 105 960 B4 offenbart.

Dabei werden in einem ersten Schritt die Werkstücke händisch von einem Bediener, zum Beispiel, an einer Werkstückhinterkante ausgerichtet und in die Durchlaufbearbeitungsvorrichtung eingeführt. Die Werkstücke werden durch die Bearbeitungsvorrichtung gefördert und automatisch an einer Seite des Werkstücks im Durchlauf bearbeitet. Nach der Bearbeitung der ersten Seite werden die Werkstücke händisch vom Bediener oder automatisch von einer Rückführeinrichtung der Bearbeitungsvorrichtung entnommen, zum Einlauf der einseitigen Durchlaufbearbeitungsvorrichtung zurück transportiert, dabei gedreht und nach einer erneuten Ausrichtung an der Werkstückhinterkante in einem zweiten Durchlauf an einer zweiten Seite bearbeitet.

Konkret bedeutet dies, dass in bisher bekannten Verfahren eine Formatbearbeitung in mehreren Durchläufen durchgeführt wird, um einen möglichst einheitlichen Werkstückkörper zu erzeugen, welcher vier rechtwinklige Ecken aufweist.

Eine derartige Bearbeitung der Werkstücke ist jedoch zeit- und personalaufwendig sowie kostenintensiv.

Die oben beschriebenen Probleme treten insbesondere bei der Bearbeitung, insbesondere der Formatbearbeitung, von Überkopfbauteilen auf.

Unter dem Begriff des Überkopfteils kann für gewöhnlich ein Bauteil bzw. Werkstück verstanden werden, bei dem zuerst mindestens eine kurze Seite bearbeitet werden muss.

Dies ist insbesondere darauf zurückzuführen, dass bei den bisher bekannten Verfahren eine Referenzseite zur Ausrichtung bei der Bearbeitung bei den jeweiligen Durchläufen zur Bearbeitung der jeweiligen Seiten des Werkstücks wechselt, denn die Ausrichtung erfolgt zum Beispiel stehts mit Bezug auf die Werkstückhinterkante.

Das heißt, bei den bisher bekannten Verfahren zur Winkelbearbeitung der beiden Werkstückseiten wird jeweils eine andere der beiden Längsseiten des Werkstücks, aufgrund des Drehen des Werkstücks zur Bearbeitung in einem zweiten Durchlauf, als Bezugskante verwendet.

### Darstellung der Erfindung

Mit Blick auf die obigen Ausführungen ist es Aufgabe der vorliegenden Erfindung ein Verfahren zur Bearbeitung von fortlaufend bewegten Werkstücken in einer einseitigen Durchlaufbearbeitungsvorrichtung vorzusehen, mit dem es möglich ist, ein maßtreues und winkelgerechtes Werkstück effizient und präzise mit möglichst wenigen Durchläufen herzustellen.

Diese Aufgabe wird durch ein Verfahren mit den Merkmalen des Anspruchs 1 gelöst. Bevorzugte Ausgestaltungen finden sich in den weiteren Ansprüchen, der folgenden Beschreibung und den Zeichnungen.

Die Werkstücke können dabei zumindest abschnittsweise aus Holz, Holzwerkstoffen, Kunststoff oder dergleichen bestehen.

Ein erfindungsgemäßes Verfahren zur Bearbeitung von fortlaufend bewegten Werkstücken in der einseitigen Durchlaufbearbeitungsvorrichtung, weist die folgenden beschriebenen Schritte auf.

Ein erstes Ausrichten des Werkstücks in der Durchlaufbearbeitungsvorrichtung an einer im Wesentlichen quer zur Bewegungsrichtung verlaufenden Referenzseite des Werkstücks.

Ein Bearbeiten einer im Wesentlichen parallel zur Bewegungsrichtung verlaufenden ersten Seite des Werkstücks in Abhängigkeit von der Referenzseite des Werkstücks.

Ein Drehen oder Rotieren des Werkstücks. Bevorzugt wird das Werkstück um 180° gedreht oder rotiert.

Das Drehen oder Rotieren, in Bewegungsrichtung betrachtet, ändert die Orientierung des Werkstücks zwischen den beiden Durchläufen um 180°.

Ein zweites Ausrichten des Werkstücks in der Durchlaufbearbeitungsvorrichtung, wobei dieses zweite Ausrichten an der im Wesentlichen quer zur Bewegungsrichtung verlaufenden Referenzseite des Werkstücks erfolgt.

Ein Bearbeiten einer im Wesentlichen parallel zur Bewegungsrichtung verlaufenden zweiten Seite des Werkstücks in Abhängigkeit von der Referenzseite.

Der Erfindung liegt also der Grundgedanke zu Grunde, ein Verfahren zur Bearbeitung von Werkstücken in der einseitigen Durchlaufbearbeitungsvorrichtung vorzusehen, wobei die Werkstücke stets auf eine einzige gerade Referenzseite ausgerichtet werden. Dadurch ist es möglich, ein Werkstück mit vier rechtwinkligen Ecken mit möglichst wenigen Durchläufen durch die Bearbeitungsvorrichtung zu erzeugen. Ferner können Parallelitätsfehler der Längsseiten zueinander "neutralisiert" werden indem stets auf die identische Referenzseite des Werkstücks Bezug genommen wird.

Der Begriff der "fortlaufend bewegten Werkstücke" ist dabei so zu verstehen, dass die Werkstücke innerhalb der Durchlaufbearbeitungsvorrichtung fortlaufend bewegt werden und vor bzw. nach der Durchlaufbearbeitungsvorrichtung ein Stoppen des Werkstücks erfolgen kann.

Das heißt, in den beiden Durchläufen durch die Durchlaufbearbeitungsvorrichtung können die im Wesentlichen parallel zur Bewegungsrichtung verlaufenden ersten und zweiten Seiten des Werkstücks in Abhängigkeit von der Referenzseite zugeführt und bearbeitet werden. Das heißt, es können, zum Beispiel effizient vier rechtwinklige Ecken entstehen, welche alle durch Bezugnahme auf eine einzige Referenzseite des Werkstücks gebildet werden.

Folglich können die Maß- und Winkelfehler des Werkstücks durch ein solches Bearbeitungsverfahren besonders präzise und effizient mit Bezug auf eine einzige Referenzseite des Werkstücks angeglichen werden.

In einer weiteren erfindungsgemäßen Ausführungsform kann das erfindungsgemäße Verfahren die folgenden Schritte aufweisen:
Ein erstes Ausrichten des Werkstücks in der Durchlaufbearbeitungsvorrichtung an einer im Wesentlichen quer zur Bewegungsrichtung verlaufenden Referenzseite des Werkstücks.

Ein Bearbeiten einer im Wesentlichen parallel zur Bewegungsrichtung verlaufenden ersten Seite des Werkstücks in Abhängigkeit von der Referenzseite des Werkstücks.

Ein Drehen oder Rotieren des Werkstücks. Bevorzugt wird das Werkstück um 180° gedreht oder rotiert.

Ein zweites Ausrichten des Werkstücks in der Durchlaufbearbeitungsvorrichtung. Hierbei wird das zweite Ausrichten in Abhängigkeit eines Winkels durchgeführt, welcher in einem Schritt des Erfassens des Winkels zwischen der quer zur Bewegungsrichtung verlaufenden Referenzseite des Werkstücks und einer der Referenzseite gegenüberliegenden Seite des Werkstücks erfasst wird. Dieses Erfassen wird während oder nach dem Bearbeiten der im Wesentlichen parallel zur Bewegungsrichtung verlaufenden ersten Seite durchgeführt.

Ein Bearbeiten einer im Wesentlichen parallel zur Bewegungsrichtung verlaufenden zweiten Seite des Werkstücks in Abhängigkeit von der Referenzseite.

Dies ist besonders vorteilhaft, da dadurch ggf. auch die Anschlagsseite, zum Beispiel stets die Werkstückhinterkante (oder stets die Werkstückvorderkante) in den Durchläufen zur Bearbeitung der ersten bzw. zweiten Seite des Werkstücks beibehalten werden kann und dennoch eine effiziente Fertigung der Werkstücke mit einem Minimum an Durchläufen erreicht werden kann.

Dies ist insbesondere darauf zurückzuführen, dass durch die Erfassung des Winkels zwischen der Referenzseite und der gegenüberliegenden Seite diese fehlende Parallelität bereits im zweiten Durchlauf zur Bearbeitung der zweiten Seite des Werkstücks ausgeglichen werden kann.

In diesem Zusammenhang ist also das Erfassen des Winkels zwischen der Referenzseite und der gegenüberliegenden Seite als Erfassung eines Parallelitätsfehlers zu verstehen. Entsprechend ist es durch diese Ausgestaltung möglich, die Positionierung des Werkstücks in der einseitigen Durchlaufbearbeitungsvorrichtung so zu kontrollieren und zu steuern, dass die Referenzseite des Werkstücks zum Beispiel genau rechtwinklig zur Vorschubrichtung positioniert ist und somit präzise und sauber bearbeitet werden kann. Entsprechend kann durch zwei Durchläufe ein präzise bearbeitetes Werkstück mit zwei zur Referenzseite rechtwinkligen Ecken durch Bearbeiten der ersten und zweiten Seite des Werkstücks, das heißt der ersten und zweiten kurzen Seiten des Werkstücks, erzeugt werden.

Voraussetzung hierfür ist, dass die Referenzseite ausreichend gerade ist.

Hierbei kann die Erfassung des Winkels durch Vorsehen von Messtechnik, bevorzugt durch haptische Tast-Sensorik oder kontaktlose Sensorik, besonders bevorzugt durch einen optischen Sensor oder Lasermesstechnik ermittelt werden.

In einer noch weiteren Ausführungsform der vorliegenden Erfindung kann das erfindungsgemäßen Verfahren, analog zu den obenstehenden Ausführungsformen, einen Schritt des zweiten Ausrichtens in der Durchlaufbearbeitungsvorrichtung aufweisen, bei dem das zweite Ausrichten des Werkstücks sowohl an der im Wesentlichen quer zur Bewegungsrichtung verlaufenden Referenzseite des Werkstücks erfolgt, als auch in Abhängigkeit des erfassten Winkels zwischen der zwischen der quer zur Bewegungsrichtung verlaufenden Referenzseite und einer der Referenzseite gegenüberliegenden Seite erfolgt.

Dies ist besonders vorteilhaft, da dadurch effizient, kostengünstig und ohne zusätzliche Durchläufe Werkstücke in einer einseitigen Durchlaufbearbeitungsvorrichtung bearbeitet werden können.

Hierbei ist der Begriff des Ausrichtens so zu verstehen, dass das Werkstück in seiner Position und Orientierung beim Durchlaufen der Durchlaufbearbeitungsvorrichtung zu seiner Referenzseite ausgerichtet wird. Das heißt, die Ausrichtung des Werkstücks an der Referenzseite bildet die Basis für die Bearbeitung. Zum Beispiel kann beim ersten Durchlauf das Werkstück der Bearbeitungsvorrichtung so zugeführt werden, dass beim Bearbeiten der ersten Seite des Werkstücks die Referenzseite rechtwinklig zur Bewegungsrichtung des Werkstücks in der Vorrichtung und damit zur Bearbeitungsstation positioniert ist. Entsprechend kann zuverlässig ein rechter Winkel zwischen der Referenzseite und der ersten Seite des Werkstücks erzeugt werden.

In diesem Kontext kann der Begriff Bewegungsrichtung auch als Vorschubrichtung oder Durchlaufrichtung verstanden werden.

Es kann sich bei dem Schritt des Bearbeitens beispielhaft um eine einseitige Zerspanung der Kanten (d.h. der Schmalflächen) des Werkstücks handeln, um eine Rechtwinkligkeit zwischen angrenzenden Seiten des Werkstücks zu erzeugen.

Der Begriff Kanten bzw. Schmalflächen kann ebenso als Stirnseiten des Werkstücks verstanden werden.

Somit kann im erfindungsgemäßen Verfahren ein Parallelitätsfehler, zum Beispiel über ein mechanisches Anschlagsystem und einer Beanschlagung an der immer gleichen Referenzseite und/oder durch eine (messtechnische) Erfassung eines Parallelitätsfehlers zwischen der Referenzseite und der der Referenzseite gegenüberliegenden Seite des Werkstücks verwendet werden, um einen Werkstück mit vier rechtwinkligen Ecken präzise und effizient zu fertigen.

Bevorzugt ist ferner ein Schritt des Geradebearbeitens der Referenzseite des Werkstücks vor dem ersten Ausrichten des Werkstücks vorgesehen.

Bei den oben beschriebenen erfindungsgemäßen Verfahren wird vorausgesetzt, dass die Referenzseite des Werkstücks hinreichend plan bzw. gerade ist, um sie als Bezugskante für die Winkelbearbeitung der ersten und zweiten Seite des Werkstücks zu verwenden. Mit dem Vor-Schritt des Geradebearbeitens der Referenzseite des Werkstücks kann vorteilhafterweise ein potenzieller Geradheitsfehler der Referenzseite selbst bereits im Vorfeld ausgebessert und so eine präzise Ausrichtung des Werkstücks an der Referenzseite sichergestellt werden.

Ferner kann ein Schritt des Bearbeitens der der Referenzseite des Werkstücks gegenüberliegenden Seite des Werkstücks in Abhängigkeit zur Referenzseite vorgesehen sein.

Dadurch ist es möglich, dass, nach dem Bearbeiten der ersten und zweiten Seite des Werkstücks in Abhängigkeit zur Referenzseite, auch die letzte verbleibende unbearbeitete Seite, ebenfalls in Abhängigkeit zur Referenzseite bearbeitet wird.

Dies kann nicht nur als konsekutiver Schritt nach dem Bearbeiten der ersten und zweiten Seiten des Werkstücks erfolgen, sondern auch als Zwischenschritt durchgeführt werden.

Hierbei ist bevorzugt, dass bei dem Bearbeiten der der Referenzseite des Werkstücks gegenüberliegenden Seite des Werkstücks in Abhängigkeit zur Referenzseite eine Parallelität der der Referenzseite des Werkstücks gegenüberliegenden Seite des Werkstücks zur Referenzseite erzeugt wird.

Mit anderen Worten, die Referenzseite und die ihr gegenüberliegende Seite des Werkstücks werden hinsichtlich ihrer Parallelität angeglichen.

Daher ist es möglich, effizient und präzise ein Werkstück mit vier rechtwinkligen Kanten mit wenigen Bearbeitungsschritten zu erzeugen.

Bevorzugt ist das Bearbeiten der im Wesentlichen parallel zur Bewegungsrichtung verlaufenden ersten und/oder zweiten Seite des Werkstücks ein Erzeugen eines Winkels zwischen der Referenzseite und der im Wesentlichen parallel zur Bewegungsrichtung verlaufenden ersten und/oder zweiten Seite. Besonders bevorzugt ist das Erzeugen des Winkels das Erzeugen einer Orthogonalität.

Dadurch kann in zwei Durchläufen ein Werkstück so bearbeitet werden, dass die ersten und zweiten Seiten des Werkstücks im rechten Winkel zu einer einzigen Referenzseite ausgerichtet sind.

Bevorzugt wird das Bearbeiten der im Wesentlichen parallel zur Bewegungsrichtung verlaufenden ersten Seite des Werkstücks in einem ersten Durchlauf durch die einseitige Durchlaufbearbeitungsvorrichtung und das Bearbeiten der im Wesentlichen parallel zur Bewegungsrichtung verlaufenden zweiten Seite des Werkstücks in einem zweiten Durchlauf durch die einseitige Durchlaufbearbeitungsvorrichtung durchgeführt.

Gemäß einer solchen Ausgestaltung ist es möglich, dass mit zwei Durchläufen durch eine kompakte einseitige Durchlaufbearbeitungsvorrichtung ein Werkstück mit zwei zur Referenzseite rechtwinkligen Ecken einfach und kostengünstig erzeugt werden kann.

Analog dazu ist es jedoch ebenfalls denkbar, dass mindestens zwei einseitige Durchlaufbearbeitungsvorrichtungen sequenziell nacheinander angeordnet sind und die jeweiligen oben beschriebenen Schritte des Verfahrens nacheinander in mindestens zwei verschiedenen Durchlaufbearbeitungsvorrichtungen durchgeführt werden.

Das Drehen oder Rotieren des Werkstücks kann händisch durch einen Bediener oder maschinell erfolgen. Hierbei ist bevorzugt, dass das maschinelle Drehen oder Rotieren durch einen Roboter oder ein Portal erfolgt. Besonders bevorzugt erfolgt ein Drehen des liegenden Werkstücks, insbesondere des auf der Breitfläche des Werkstücks liegenden Werkstücks, um eine vertikale Drehachse.

Die Referenzseite kann eine Längskante des Werkstücks sein.

Gemäß einer Ausgestaltung bei der die Längskante die Referenzseite des Werkstücks darstellt, ist es möglich, dass die längere Seite des Werkstücks zur Ausrichtung und als Bezugspunkt für die Bearbeitung, insbesondere zur Erzeugung von rechtwinkligen Ecken und zur Ausbesserung von Unregelmäßigkeiten und unerwünschten Toleranzen dient. Das heißt, die erste und zweite Seite des Werkstücks, welche bearbeitet werden, sind die kürzeren Querseiten, wohingegen eine Längskante des Werkstücks als Referenzseite zur Beanschlagung dient.

Bevorzugt dient die Referenzseite des Werkstücks als Anschlag für die Bearbeitung in der Durchlaufbearbeitungsvorrichtung.

Bevorzugt erfolgt ein Fördern und das erste und zweite Ausrichten des Werkstücks durch die einseitige Durchlaufbearbeitungsvorrichtung mittels eines Anschlagsystems, bevorzugt mittels eines mechanischen Anschlagsystems.

Gemäß einer solchen Ausgestaltung ist es möglich, dass die Position und Ausrichtung des Werkstücks in der einseitigen Durchlaufbearbeitungsvorrichtung akkurat festgelegt und während der Bearbeitung dauerhaft beibehalten werden kann. Ferner kann durch ein solches Anschlagsystem sichergestellt werden, dass die Bearbeitungsschritte, zum Beispiel eine einseitige Zerspanung der Kanten bzw. Schmalflächen sicher durchgeführt werden kann.

Bevorzugt ist das Anschlagsystem so ausgestaltet, dass mindestens ein Nocken und mindestens ein Gegenhalter, bevorzugt eine Vielzahl von Nocken und Gegenhaltern, an gegenüberliegenden im Wesentlichen quer zur Bewegungsrichtung verlaufenden Seiten des Werkstücks angeordnet sind.

Alternativ und analog dazu, kann anstatt des mindestens einen Nockens und mindestens einen Gegenhalters ebenso eine Ansaugvorrichtung zur Ausgestaltung eines Anschlagsystems vorgesehen sein. Ebenso kann mindestens eine Fixierklemme an gegenüberliegenden im Wesentlichen quer zur Bewegungsrichtung verlaufenden Seiten des Werkstücks angeordnet sein, um als Anschlagsystem zu fungieren. Eine weitere potenzielle Ausgestaltung eines Anschlagsystems kann das Vorsehen eines drehbaren Tisches, welcher mittels Vakuums die Position des Werkstücks fixiert, sein.

Bevorzugt erfolgt das zweite Ausrichten des Werkstücks in Abhängigkeit des erfassten Winkels durch eine Positionskorrektur des Anschlagsystems.

Dies bedeutet, dass die ggf. mangelnde Parallelität zwischen der Referenzseite und der der Referenzseite gegenüberliegenden Seite zunächst erfasst wird und ein aufgrund dieser gegebenenfalls fehlenden Parallelität vorliegender Winkel durch das Bearbeiten der zweiten Seite des Werkstücks mittels einer Positionskorrektur des Anschlagsystems erfolgt.

Mit anderen Worten, nach oder während dem Bearbeiten der ersten Seite kann ein Parallelitätsfehler der Längsseiten zueinander festgestellt werden und aufgrund einer Positionskorrektur des Anschlagsystems vor dem Bearbeiten der zweiten Seite ausgeglichen werden. Eine solche Ausgestaltung ermöglicht, dass mittels einer einfachen strukturellen Ausgestaltung und ohne zusätzliche Durchläufe ein Werkstück mit vier rechtwinkligen Ecken in hoher Präzision und Zuverlässigkeit gefertigt werden kann.

Bevorzugt erfolgt das erste Ausrichten in Bewegungsrichtung an einer Werkstückvorderkante bezogen auf die Durchlaufrichtung und das zweite Ausrichten in Bewegungsrichtung an einer Werkstückhinterkante bezogen auf die Durchlaufrichtung. Alternativ dazu kann das erste Ausrichten in Bewegungsrichtung an einer Werkstückhinterkante bezogen auf die Durchlaufrichtung und das zweite Ausrichten in Bewegungsrichtung wiederum an einer Werkstückvorderkante bezogen auf die Durchlaufrichtung erfolgen.

Gemäß einer solchen Ausgestaltungsform ist es möglich, dass bei dem Verfahren zur Bearbeitung von fortlaufend bewegten Werkstücken in der einseitigen Durchlaufbearbeitungsvorrichtung, bei denen auch nach einem ersten Durchlauf und einer ersten Bearbeitung einer ersten Seite und einem Drehen des Werkstücks, stets die gleiche Referenzseite als Anschlag verwendet werden kann.

Das heißt, auch beim zweiten Durchlauf wird das Werkstück der Bearbeitungsvorrichtung so zugeführt, dass stets dieselbe, einzige Referenzseite zum Ausrichten des Werkstücks verwendet wird, sodass stets die Referenzseite rechtwinklig zur Bewegungsrichtung positioniert ist.

Bezogen auf die Bewegungsrichtung des Werkstücks, kann sich hierbei die Referenzseite beim ersten Durchlauf stromabwärts und beim zweiten Durchlauf stromaufwärts des Werkstücks befinden. Analog dazu ist es ebenso möglich, dass sich beim ersten Durchlauf die Referenzseite des Werkstücks, bevorzugt eine Längsseite des Werkstücks als Referenzseite, im ersten Durchlauf stromaufwärts und beim zweiten Durchlauf stromabwärts des Werkstücks befindet.

In dieser bevorzugten Ausgestaltungsform wechselt vom ersten zum zweiten Durchlauf zum Bearbeiten der ersten bzw. zweiten Seite also die Werkstückkante als Referenz, wenn sie in der Bewegungsrichtung betrachtet wird zwischen der Werkstückhinterkante und der Werkstückvorderkante.

Noch anders ausgedrückt, kann die Referenzseite des Werkstücks als Bezugskante für die rechtwinklige Ausrichtung des Werkstücks zur Bewegungsrichtung im ersten Durchlauf vorne und im zweiten Durchlauf hinten oder im ersten Durchlauf hinten im zweiten Durchlauf vorne angeordnet sein.

Es kommt zu einem Wechsel der Anschlagseite, sodass eine Korrektur im Anschlagsystem, wie sie oben beschrieben wird, nicht zwingend notwendig ist.

Losgelöst davon kann der Wechsel der Anschlagseite jedoch in Zusammenspiel mit der Korrektur im Anschlagsystem ebenso gemeinsam durchgeführt werden.

### Kurze Beschreibung der Zeichnungen

Nachfolgend wird anhand schematischer Zeichnungen ein Verfahren zur Bearbeitung von fortlaufend bewegten Werkstücken, die bevorzugt zumindest abschnittsweise aus Holz, Holzwerkstoffen, Kunststoff oder dergleichen bestehen, in einer einseitigen Durchlaufbearbeitungsvorrichtung beschrieben. Es zeigen:
Figur 1: Ein schematisches Flussdiagramm eines Verfahrens zur Bearbeitung von fortlaufend bewegten Werkstücken in einer einseitigen Durchlaufbearbeitungsvorrichtung gemäß einer ersten beispielhaften Ausführungsform.
Figur 2: Ein schematisches Flussdiagramm eines Verfahrens zur Bearbeitung von fortlaufend bewegten Werkstücken in einer einseitigen Durchlaufbearbeitungsvorrichtung gemäß einer zweiten beispielhaften Ausführungsform.

### Detaillierte Beschreibung der bevorzugten Ausführungsformen

Zur Erläuterung und zum besserem Verständnis der vorliegenden Erfindung wird nachfolgend auf bevorzugte beispielhafte Ausführungsformen der vorliegenden Erfindung Bezug genommen.

Die beispielhaften Ausführungsformen werden nachfolgend mit Bezug auf ein rechteckiges Werkstück W beschrieben, welches zwei längere Seiten, das heißt Längsseiten L1 und L2, sowie zwei kürzere Querseiten K1 und K2 aufweist. Es ist ebenso möglich, dass Werkstücke mit vier gleich langen Seiten verwendet werden. Die nachfolgend beschriebenen Verfahren der bevorzugten Ausführungsformen sind darauf analog anwendbar.

Ein solches (rechtwinkliges) Werkstück W ist zum Beispiel ein Rohteil für eine Möbelproduktion, welches noch keine ausreichende Maß-, Parallelitäts- und Winkelgenauigkeit aufweist, um als fertiges Bauteil verwendet zu werden.

### Erste Ausführungsform

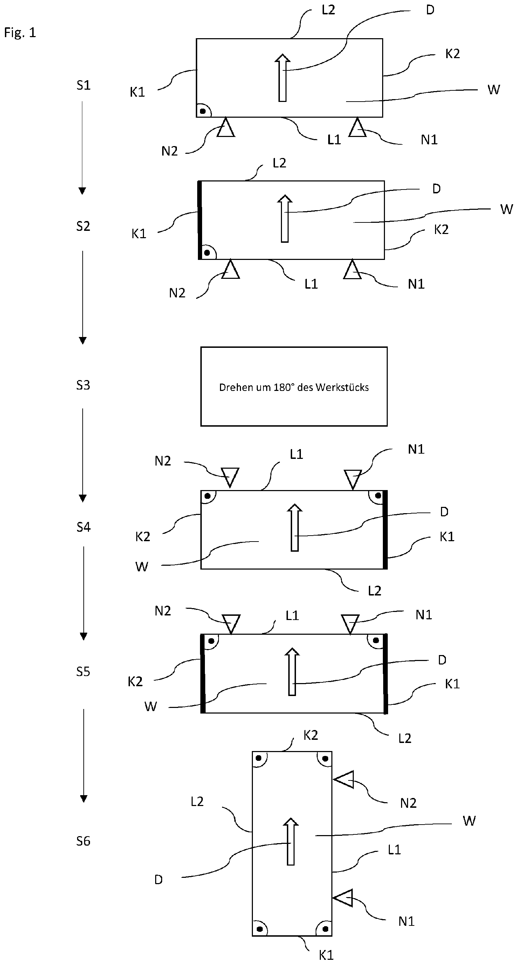

Unter Bezugnahme auf Figur 1 wird nun auf eine erste Ausführungsform der vorliegenden Erfindung Bezug genommen.

Figur 1 veranschaulicht dabei eine erste Ausführungsform der vorliegenden Erfindung, bei der ein Wechsel der Anschlagseite zwischen einem ersten Bearbeitungsschritt einer ersten Werkstückseite K1 und einem zweiten Bearbeitungsschritt einer zweiten Werkstückseite K2 durchgeführt wird, um so sicherzustellen, dass das Erzeugen von Winkeln am Werkstück W stets in Bezug auf eine einzige Referenzseite L1 erfolgt.

In diesem Zusammenhang muss das oben beschriebene rechteckige Werkstück W mit seinen zwei Längsseiten L1 und L2 und zwei kürzeren Querseiten K1 und K2 bearbeitet werden, um verbleibende Maß- und Winkelfehler des Werkstücks W auszugleichen.

Hierzu ist eine einseitige Durchlaufbearbeitungsvorrichtung vorgesehen. In dieser Vorrichtung können Werkstücke, zum Beispiel auf einem Träger fixiert und mittels eines Anschlagsystems in die Durchlaufbearbeitungsvorrichtung zugeführt bzw. gefördert werden, um dabei bearbeitet zu werden.

Um die oben beispielhaft beschriebenen Maß- und Winkelfehler auszugleichen, wird in den beispielhaften Ausführungsformen mit der einseitigen Durchlaufbearbeitungsvorrichtung entsprechend eine Formatbearbeitung der Rohteile in mehreren Durchläufen durchgeführt, um so ein Werkstück W zu erzeugen, welches vier rechtwinklige Ecken aufweist und entsprechend die Längsseiten L1, L2 und Querseiten K1, K2 parallel zueinander sind.

Das heißt, in zwei Durchläufen, welche nachfolgend und unter Bezugnahme auf Figur 1 detaillierter beschrieben werden, werden die kürzeren Querseiten K1, K2 der einseitigen Durchlaufbearbeitungsvorrichtung so zugeführt und bearbeitet, dass möglichst effizient vier rechtwinklige Ecken entstehen.

Wie oben erläutert, wird dies in der ersten Ausführungsform durch einen Wechsel der Anschlagseite zwischen den beiden Bearbeitungsdurchläufen erzielt.

In diesem Zusammenhang weist die erste Durchlaufbearbeitungsvorrichtung zum Beispiel einen Fräskopf auf, welcher ausgestaltet ist, die Schmalflächen (d.h. die Stirnflächen) des rechtwinkligen Werkstücks W in einem Durchlaufbetrieb, bei dem sich das Werkstück W an dem Fräskopf entlang bewegt, zu bearbeiten. Ebenso ist es möglich, dass in der einseitigen Durchlaufbearbeitungsvorrichtung sowohl der Fräskopf als auch das Werkstück W relativ zueinander bewegt werden.

In der in Figur 1 schematisch dargestellten ersten Ausführungsform ist ein Fördern und nachfolgend beschriebenes Ausrichten des rechtwinkligen Werkstücks W durch die einseitige Durchlaufbearbeitungsvorrichtung mittels eines Anschlagsystems realisiert.

Dieses Anschlagsystem weist, wie zum Bespiel in Schritt S1 bis S5 gezeigt, zwei Nocken N1, N2 an der Referenzseite des Werkstücks, hier einer ersten Längsseite L1 des Werkstücks, und entsprechende Gegenhalter an einer gegenüberliegenden Seiten L2 des Werkstücks W auf. In der in Figur 1 gezeigten Ausführungsform sind die Nocken N1, N2 und Gegenhalter an den Längsseiten L1, L2 des Werkstücks W vorgesehen.

Zur einfacheren Orientierung und zur Klarstellung, dass die Nocken N1, N2 als Anschlagsystem dienen, welche für die Ausrichtung des Werkstücks W in der einseitigen Durchlaufbearbeitungsvorrichtung entscheidend sind, wird in den Figuren der vorliegenden Anmeldung auf die Darstellung der Gegenhalter verzichtet.

In der in Figur 1 dargestellten beispielhaften Ausführungsform wird das rechtwinklige Werkstück W so mittels des Anschlagsystems fixiert, dass eine erste Längsseite L1 mit den Nocken N1 und N2 zusammenwirkt und die (nicht dargestellten) Gegenhalter an der gegenüberliegenden Längsseite L2 anliegen.

Für gewöhnlich kann hier vorausgesetzt werden, dass die Werkstückseite L1, das heißt die Längskante L1, als Referenzkante hinreichend plan bzw. gerade ist, um sie mechanisch als Bezugskante für die Winkelbearbeitung von den Seiten K1 und K2 zu verwenden.

Ist dies nicht der Fall, kann ein nicht dargestellter Vor-Schritt des Geradebearbeitens der Längsseite L1 des Werkstücks W bereits vor einem ersten Ausrichten des Werkstücks W zum Bearbeiten der Querseiten K1 und K2 durchgeführt werden, um einen Geradheitsfehler der Längskante L1 auszugleichen.

Das erfindungsgemäße Verfahren zum Bearbeiten eines Werkstücks, hier zum effizienten Erzeugen eins Werkstücks W mit vier rechtwinkligen Ecken, beginnt bei Schritt S1 in Fig. 1.

Schritt S1 in Figur 1 stellt einen ersten Durchlauf des rechtwinkligen Werkstücks W durch die einseitige Durchlaufbearbeitungsvorrichtung dar. In dem Verfahren gemäß der ersten Ausführungsform wird in Schritt S1 das rechtwinklige Werkstück W an einer ersten Längsseite L1, als Referenzseite, durch die Nocken N1 und N2 und die gegenüberliegenden (nicht dargestellten) Gegenhalter ausgerichtet.

Der Begriff Ausrichten bedeutet in diesem Zusammenhang, dass die Längsseite L1 genau rechtwinklig zur Vorschubrichtung, hier die durch einen Pfeil dargestellte Durchlaufrichtung D, positioniert ist.

Das heißt, in dem ersten Schritt S1 wird also das Werkstück W an der im Wesentlichen quer zur Bewegungsrichtung verlaufenden Längsseite L1 als Referenzseite des Werkstücks W erstmals ausgerichtet.

Nach dem ersten Ausrichten des rechtwinkligen Werkstücks W an der Längsseite L1 in Schritt S1 wird das angeschlagene Werkstück W in der einseitigen Durchlaufbearbeitungsvorrichtung durch ein Fördern durch die Durchlaufbearbeitungsvorrichtung an einer Bearbeitungsstation vorbei bearbeitet (Schritt S2).

Hierbei wird in Schritt S2 eine erste Querseite K1 des Werkstücks, welche im Wesentlichen parallel zur Bewegungsrichtung verläuft in Abhängigkeit von der Referenzseite, bearbeitet.

Die Bearbeitung der ersten Querseite K1 des Werkstücks W wird in Schritt S2 gegenüber Schritt S1 fett hervorgehoben.

Wie Schritt S2 in Figur 1 zu entnehmen ist, wird durch dieses erste Bearbeiten der ersten Seite K1 ein rechter Winkel, das heißt eine Orthogonalität, zwischen der ersten Längsseite L1 und der ersten kurzen Querseite K1 des Werkstücks, welche im Wesentlichen parallel zu Durchlaufrichtung D verläuft, erzeugt.

Im Anschluss wird das Werkstück W in einem Schritt S3 um 180° gedreht. Hierbei kann das Werkstück W insbesondere um eine vertikale Drehachse bewegt werden. Hierbei kann ferner das Drehen des Werkstücks W händisch durch einen Bediener, oder maschinell, bevorzugt durch einen Roboter oder ein Portal, erfolgen.

Im Anschluss daran wird in Schritt S4 der Fig. 1 das rechtwinklige Werkstück W ein zweites Mal in der Durchlaufbearbeitungsvorrichtung für einen zweiten Durchlauf ausgerichtet. Wie dabei Schritt S4 in Figur 1 der vorliegenden Erfindung zu entnehmen ist, findet in der ersten Ausführungsform hierbei ein Wechsel der Anschlagseite statt.

Das heißt, während in den Schritten S1 und S2, also im ersten Durchlauf, noch eine Werkstückhinterkante als Anschlag verwendet worden ist, bildet nun die Werkstückvorderkante die Referenzseite für das Anschlagsystem.

Somit bleibt die Längsseite L1 als einzige Referenzseite ausschlaggebend für die Ausrichtung im zweiten Bearbeitungsdurchlauf.

Das bedeutet, das erste Ausrichten in Bewegungsrichtung hat im ersten Durchlauf an einer Werkstückhinterkante und das zweite Ausrichten hat in Bewegungsrichtung an einer Werkstückvorderkante stattgefunden, wobei stets die gleiche Längskante L1 des Werkstücks W als Referenzseite für die Ausrichtung des Werkstücks W zur Bearbeitung dient. In einer weiteren nicht dargestellten Ausführungsform ist es ebenso möglich, dass, unter Beibehaltung der Längskante L1 als Referenzkante, beim ersten Ausrichten diese Ausrichtung in Bewegungsrichtung an einer Werkstückvorderkante und das zweite Ausrichten in Bewegungsrichtung an einer Werkstückhinterkante erfolgt.

Ebenso ist die Ausführungsform gemäß Fig. 1 auf ein Verfahren anwendbar, bei welchem stehts die zweite Längsseite L2 des Werkstücks W als einzige Referenzseite für die Bearbeitungsdurchläufe durch die Durchlaufbearbeitungsvorrichtung dient.

Im nachfolgenden Schritt S5 wird ein weiterer, zweiter Bearbeitungsschritt durchgeführt. Dabei wird auch die zweite kurze Querseite K2 des Werkstücks W in Abhängigkeit von der Referenzseite, hier der Längsseite L1, bearbeitet. Mit anderen Worten, auch beim zweiten Durchlauf (die Bearbeitung der kurzen Querseite K2 des Werkstücks) wird das Werkstück W der Bearbeitungsvorrichtung so zugeführt, das wiederum die Längsseite L1 genau rechtwinklig zur Durchlaufrichtung positioniert ist.

Durch dieses Bearbeiten der zweiten, kurzen Querseite K2 des Werkstücks W kann somit auch an der Querseite K2 eine Orthogonalität zwischen der Referenzseite, hier der Längsseite L1, und der zweiten Querseite K2 erzeugt werden.

Durch die ersten beiden Durchläufe kann somit ein Werkstück W erzielt werden, welches eine Orthogonalität zwischen den kurzen Querseiten K1 und K2 des Werkstücks W jeweils zur ersten Längsseite L1 aufweist, denn die Längsseite L1 hat kontinuierlich in beiden Durchläufen aufgrund des Wechsels der Anschlagseite als Referenzseite für die Ausrichtung des Werkstücks W gedient.

In einem weiteren, nachfolgenden Schritt S6 kann in der ersten Ausführungsform die der ersten Längsseite L1 gegenüberliegenden Längsseite L2 bearbeitet werden.

In diesem Schritt S6 wird insbesondere die zweite Längsseite L2 hinsichtlich ihrer Parallelität zur ersten Referenzseite L1 bearbeitet, um so ein Werkstück W mit vier rechtwinkligen Ecken und parallel zueinander verlaufenden Längs- und Querseiten in drei Durchläufen durch die einseitige Bearbeitungsvorrichtung zu erzielen.

Hierbei kann die Bearbeitung der zweiten Längsseite L2 des Werkstücks W ebenfalls über ein Anschlagsystem oder beispielsweise über einen (nicht dargestellten) Referenzfräser erfolgen. Das heißt, hierbei wird eine Längsbearbeitung der Längsseite L2 parallel zur Referenzseite L1 durchgeführt.

### Zweite Ausführungsform

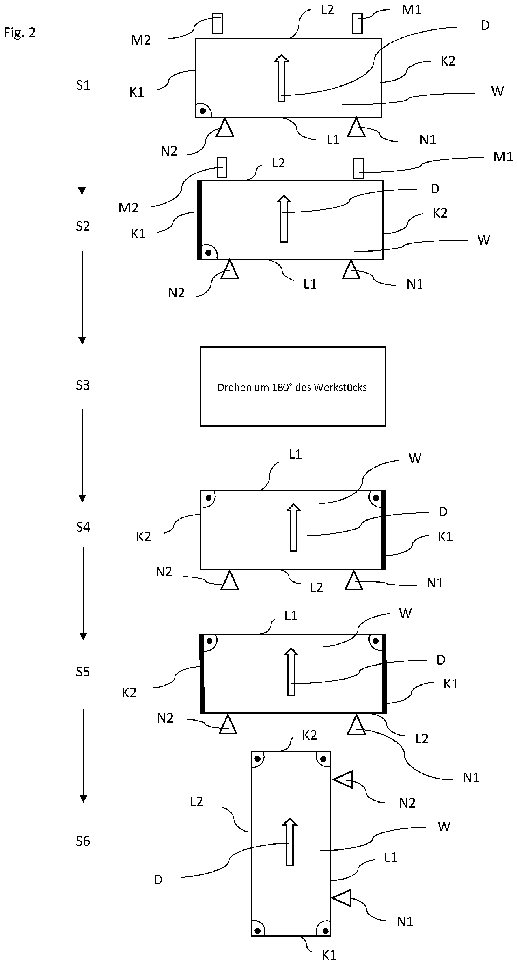

Nachfolgend wird nun unter Bezugnahme auf Figur 2 eine zweite Ausführungsform beschrieben.

Die zweite Ausführungsform unterscheidet sich dahingehend von der ersten Ausführungsform gemäß Fig. 1, dass, anstatt eines Wechsels der Anschlagseite, um stets dieselbe Referenzseite des Werkstücks W als Basis für die Bearbeitung der kurzen Querseiten K1 und K2 des Werkstücks W zu verwenden, ein Messsystem vorgesehen ist.

In der bevorzugten zweiten Ausführungsform ist das Messystem zum Beispiel durch zwei optische Sensoren M1, M2 ausgestaltet, welche ausgestaltet sind, einen Winkel von der erste Längsseite L1 zur zweiten Längsseite L2 zu erfassen. Hierbei können die optischen Sensoren M1, M2 zum Beispiel oberhalb einer Position angeordnet sein, an der das Werkstück W durch die Bearbeitungsvorrichtung gefördert wird.

Mittels der optischen Sensoren M1, M2 des Messsystems kann also ein Parallelitätsfehler zwischen der ersten Längsseite L1 und der zweiten Längsseite L2 des Werkstücks W bei einem ersten Durchlauf (Schritte S1 bis S3) bestimmt werden.

Das heißt in der zweiten Ausführungsform kann zum Beispiel stets die Werkstückhinterkante oder stets die Werkstückvorderkante in beiden Durchläufen zur Bearbeitung der Querseiten K1, K2 als Anschlag und Referenz für die Ausrichtung zur Bearbeitung des Werkstücks W verwendet werden.

Ferner kann so ein Parallelitätsfehler zwischen den beiden Längsseiten L1 und L2 des Werkstücks W durch Messtechnik erfasst werden. Dieser Parallelitätsfehler kann dann bereits im Vorfeld eines zweiten Durchlaufs zum Bearbeiten der zweiten Querseite K2 des Werkstücks W ausgeglichen werden.

Wie nachfolgend erläutert, kann dieser Ausgleich auf Grund einer Korrektur im Anschlagsystem erfolgen.

Wie aus Figur 2 ersichtlich ist, finden auch in der zweiten Ausführungsform die Schritte S1 bis S3 analog wie bei der ersten Ausführungsform gemäß Fig. 1 statt.

Auch hier erfolgt die Positionierung und Ausrichtung der ersten Längsseite L1 an den Nocken N1, N2 im ersten Durchlauf rechtwinklig zur Durchlaufrichtung D über ein mechanisches Anschlagsystem bei der Zuführung zur Durchlaufmaschine.

Entsprechend werden redundante Ausführungen zum ersten Ausrichten gemäß Schritt S1 sowie zum Bearbeiten der ersten kurzen Querseite K1 des Werkstücks W gemäß Schritt S2 und das Drehen des Werkstücks W um 180°, unter Verweis auf die obigen Ausführungen zur ersten Ausführungsform, weggelassen.

Die zweite Ausführungsform unterscheidet sich jedoch dahingehend von der ersten Ausführungsform, dass im ersten Durchlauf, das heißt die Bearbeitung der ersten kurzen Querseite K1 des Werkstücks, zusätzlich der Parallelitätsfehler von der ersten Längsseite L1 zu der zweiten Längsseite L2 messtechnisch durch die optischen Sensoren M1, M2 erfasst wurde.

Wie Schritt S4 in Fig. 2 zu entnehmen ist, erfolgt dann das zweite Ausrichten des Werkstücks W in Abhängigkeit des von der Messtechnik erfassten Winkels zwischen der im ersten Durchlauf als Referenzseite dienenden ersten Längsseite L1 zu der zweiten Längsseite L2.

Das zweite Ausrichten des Werkstücks W für einen zweiten Durchlauf erfolgt also zum Beispiel in Abhängigkeit des erfassten Winkels von L1 zu L2 durch eine Positionskorrektur des Anschlagsystems.

Nach der Positionskorrektur durch das Anschlagssystem kann in Schritt S5 dann die zweite Querseite K2 des Werkstücks W im rechten Winkel zur Werkstückhinterkante einfach und unkompliziert bearbeitet werden.

Diese durchgeführten Bearbeitungen zur Erzeugung einer Orthogonalität an den Querseiten K1 und K2 zu entsprechenden Referenzseiten ist in den Figuren 1 und 2 fett an den Querseiten K1 und K2 hervorgehoben.

Im Anschluss an Schritt S5 erfolgt wiederum analog zur ersten Ausführungsform, ein weiterer Schritt S6. Hier wird in einem dritten Durchlauf eine Längsbearbeitung auch der zweiten Längsseite L2 des rechtwinkligen Werkstücks W in Abhängigkeit zur ersten Längsseite L1 durchgeführt. Nachdem dieser Schritt identisch zur ersten Ausführungsform ist, wird von redundanten Ausführungen hierzu abgesehen.

### Dritte Ausführungsform

In einer weiteren, nicht dargestellten, dritten Ausführungsform ist es darüber hinaus ebenso möglich, die Lösungsmöglichkeiten zum zweiten Ausrichten des Werkstücks W gemäß der ersten und zweiten Ausführungsformen wie oben beschrieben zu kombinieren.

Mit anderen Worten, es kann sowohl die Anschlagseite zwischen den Durchläufen gewechselt werden als auch während oder nach eines ersten Durchlaufs ein Parallelitätsfehler zwischen den beiden Längsseiten messtechnisch erfasst und bei dem zweiten Durchlauf zur Bearbeitung der zweiten, kurzen Querseite K2 des Werkstücks W berücksichtigt werden.

Auch in der dritten Ausführungsform kann durch eine Positionskorrektur des Anschlagsystems der erfasste Parallelitätsfehler ausgeglichen werden.

## Patentansprüche

1. Verfahren zur Bearbeitung von fortlaufend bewegten Werkstücken (W), die bevorzugt zumindest abschnittsweise aus Holz, Holzwerkstoffen, Kunststoff oder dergleichen bestehen, in einer einseitigen Durchlaufbearbeitungsvorrichtung, mit den Schritten:
erstes Ausrichten eines Werkstücks (W) in der Durchlaufbearbeitungsvorrichtung an einer im Wesentlichen quer zur Bewegungsrichtung (D) verlaufenden Referenzseite (L1) des Werkstücks (W);
Bearbeiten einer im Wesentlichen parallel zur Bewegungsrichtung (D) verlaufenden ersten Seite (K1) des Werkstücks (W) in Abhängigkeit von der Referenzseite (L1);
Drehen oder Rotieren des Werkstücks (W), bevorzugt um 180°;
zweites Ausrichten des Werkstücks (W) in der Durchlaufbearbeitungsvorrichtung;
Bearbeiten einer im Wesentlichen parallel zur Bewegungsrichtung (D) verlaufenden zweiten Seite (K2) des Werkstücks (W) in Abhängigkeit von der Referenzseite(L1),
**dadurch gekennzeichnet, dass**
das zweite Ausrichten des Werkstücks (W) an der im Wesentlichen quer zur Bewegungsrichtung (D) verlaufenden Referenzseite (L1) des Werkstücks (W) erfolgt, und/oder
während oder nach dem Bearbeiten der im Wesentlichen parallel zur Bewegungsrichtung (D) verlaufenden ersten Seite (K1) des Werkstücks (W), ein Erfassen eines Winkels zwischen der quer zur Bewegungsrichtung (D) verlaufenden Referenzseite (L1) des Werkstücks (W) und einer der Referenzseite gegenüberliegenden Seite (L2) des Werkstücks (w) erfolgt, und
das zweite Ausrichten des Werkstücks (W) in Abhängigkeit des erfassten Winkels erfolgt.

2. Verfahren nach Anspruch 1, ferner mit dem Schritt des Geradebearbeitens der Referenzseite (L1) des Werkstücks (W), vor dem ersten Ausrichten des Werkstücks (W).

3. Verfahren gemäß einem der vorhergehenden Ansprüche, ferner mit dem Schritt des Bearbeitens der der Referenzseite des Werkstücks (W) gegenüberliegenden Seite (L2) des Werkstücks (W) in Abhängigkeit zur Referenzseite(L1).

4. Verfahren gemäß Anspruch 3, wobei bei dem Bearbeiten der der Referenzseite des Werkstücks (W) gegenüberliegenden Seite (L2) des Werkstücks (W) in Abhängigkeit zur Referenzseite (L1) eine Parallelität der der Referenzseite des Werkstücks (W) gegenüberliegenden Seite (L2) des Werkstücks (W) zur Referenzseite(L1) erzeugt wird.

5. Verfahren gemäß einem der vorhergehenden Ansprüche, wobei das Bearbeiten der im Wesentlichen parallel zur Bewegungsrichtung (D) verlaufenden ersten Seite (K1) und/oder zweiten Seite (K2) des Werkstücks (W) ein Erzeugen eines Winkels, bevorzugt einer Orthogonalität, zwischen der Referenzseite (L1) und der im Wesentlichen parallel zur Bewegungsrichtung (D) verlaufenden ersten Seite (K1) und/oder zweiten Seite (K2) ist.

6. Verfahren gemäß einem der vorhergehenden Ansprüche, wobei das Bearbeiten der im Wesentlichen parallel zur Bewegungsrichtung (D) verlaufenden ersten Seite (K1) des Werkstücks (W) in einem ersten Durchlauf durch die einseitige Durchlaufbearbeitungsvorrichtung und das Bearbeiten der im Wesentlichen parallel zur Bewegungsrichtung (D) verlaufenden zweiten Seite (K2) des Werkstücks (W) in einem zweiten Durchlauf durch die einseitige Durchlaufbearbeitungsvorrichtung erfolgt.

7. Verfahren gemäß einem der vorhergehenden Ansprüche, wobei das Drehen oder Rotieren des Werkstücks (W) händisch durch einen Bediener oder maschinell, bevorzugt durch einen Roboter oder ein Portal, erfolgt.

8. Verfahren gemäß einem der vorhergehenden Ansprüche, wobei die Referenzseite (L1) eine Längskante des Werkstücks (W) ist.

9. Verfahren gemäß einem der vorhergehenden Ansprüche, wobei die Referenzseite (L1) des Werkstücks (W) als Anschlag für die Bearbeitung in der einseitigen Durchlaufbearbeitungsvorrichtung dient.

10. Verfahren gemäß einem der vorhergehenden Ansprüche, wobei ein Fördern und das erste und zweiten Ausrichten des Werkstücks (W) durch die einseitige Durchlaufbearbeitungsvorrichtung mittels eines Anschlagsystems erfolgt.

11. Verfahren gemäß Anspruch 10, wobei das Anschlagsystem so ausgestaltet ist, dass mindestens ein Nocken (N1, N2) und mindestens ein Gegenhalter, bevorzugt eine Vielzahl von Nocken (N1, N2) und Gegenhaltern, an gegenüberliegenden, im Wesentlichen quer zur Bewegungsrichtung (D) verlaufenden Seiten des Werkstücks (W) angeordnet sind.

12. Verfahren gemäß Anspruch 10 oder 11, wobei das zweite Ausrichten des Werkstücks (W) in Abhängigkeit des erfassten Winkels durch eine Positionskorrektur des Anschlagsystems erfolgt.

13. Verfahren gemäß einem der Ansprüche 1 bis 11, wobei das erste Ausrichten in Bewegungsrichtung (D) an einer Werkstückvorderkante und das zweite Ausrichten in Bewegungsrichtung (D) an einer Werkstückhinterkante erfolgt, oder
wobei das erste Ausrichten in Bewegungsrichtung (D) an einer Werkstückhinterkante und das zweite Ausrichten in Bewegungsrichtung (D) an einer Werkstückvorderkante erfolgt.
